# EUROPEAN PATENT APPLICATION

(11) **EP 1 481 996 A1**
(43) Date of publication of application: **01.12.2004**
(21) Application number: 03076675.2
(22) Date of filing: 30.05.2003
(51) Int. Cl.: C08F 297/04, C08L 53/02

(54) **Process for making a coupled block copolymer composition**

(71) Applicant: KRATON Polymers Research B.V., 1031 CM Amsterdam (NL)
(72) Inventor: Van der Huizen, Adrie A., 1030 BH Amsterdam (NL); Hageman, Mark, 1030 BH Amsterdam (NL)
(74) Representative: Kortekaas, Marcel C. J. A.

(57) **Abstract**

This invention relates to a process for making a coupled block copolymer composition, comprising the steps of:
a. reacting a living lithium-terminated polymer having the formula P-Li, where P is a copolymer chain having at least one polymer block A composed of one or more mono alkenyl arenes having 8 to 18 carbon atoms and at least one polymer block B composed of one or more conjugated dienes having 4 to 12 carbon atoms, with an alkoxy silane coupling agent having the formula R-Si-(OR')₃, where R is selected from aryl radicals having from 6 to 12 carbon atoms, or linear alkyl and branched alkyl radicals having from 1 to 12 carbon atoms, and R' is selected from linear alkyl radicals having from 1 to 4 carbon atoms, and where the molar ratio of Si to Li is between 0.35 and 0.7, thereby forming a coupled block copolymer composition;
b. optionally hydrogenating the coupled block copolymer composition; and
c. recovering the resulting coupled block copolymer composition. It also relates to the resulting composition.

## Description

### BACKGROUND OF THE INVENTION

### Field of the Invention

This invention relates to a process for making a coupled block copolymer composition and the resulting composition. More in particular, the invention relates to the coupling of anionic polymers and to the hydrogenation of such coupled polymers to make a polymer composition containing low levels of uncoupled polymer and having a substantial linear character.

### Background of the Art

The coupling of lithium-terminated polymers is a process known in the art. In accordance with this known process, a lithium-terminated polymer is treated with a compound having two or more reactive sites capable of reacting with the carbon-lithium bonds of the lithium-terminated polymer. In many cases the multifunctional coupling agent thereby becomes a nucleus for the resulting structure. From this nucleus long chain polymeric branches radiate and such coupled polymers have specific properties that render them useful for particular applications.

Linear polymers are formed by employing coupling agents having two reactive sites. For example, one coupling agent employed in making linear polymers is methyl benzoate as disclosed in U. S. Pat. No. 3,766,301. Radial polymers are formed by employing coupling agents having more than two reactive sites. Examples of such coupling agents include among others silica compounds, including silicon tetrachloride and alkoxy silanes - U. S. Pat. Nos. 3, 244,664, 3,692,874, 4,076,915, 5,075,377, 5,272,214 and 5,681,895; polyepoxides, polyisocyanates, polyimines, polyaldehydes, polyketones, polyanhydrides, polyesters, polyhalides - U. S. Pat. No. 3,281,383; diesters - U.S. Pat. No. 3,594,452; methoxy silanes - U.S. Pat. No. 3,880,954; divinyl benzene - U.S. 3,985,830; 1,3,5-benzenetricarboxylic acid trichloride - U.S. Pat. No. 4,104,332; glycidoxytrimethoxy silanes -U.S. Pat. No. 4,185,042; and oxydipropylbis(trimethoxy silane) - U.S. Pat. No. 4,379,891.

The production of styrenic block copolymers by coupling has a number of process advantages over sequential polymerization, such as better control over the styrene block size and lower viscosity during polymerization. However, the inevitable presence of un-coupled arms can limit product performance. Diblock contamination can greatly reduce tensile strength and related properties in a triblock copolymer or compound thereof. S-E/B-S polymers (hydrogenated poly(styrene-butadiene-styrene) block copolymers) for use in applications such as highly - oiled compounds cannot afford to sacrifice in this area. It is generally difficult to achieve coupling efficiencies of better than 80% whilst retaining the linear character of the product. While coupling efficiencies on the order of 90% can be achieved by reaction with m-divinylbenzene, the resulting products are high molecular weight "star" polymers. Although the melt viscosity of such a polymer is much lower than a linear product of the same total molecular weight, it is much higher than that of the corresponding triblock that would be prepared by coupling two of the diblock arms. Moreover, coupled copolymers are prone to decoupling during a subsequent hydrogenation step.

It would be highly desirable to identify a coupling agent that gives a substantially linear product, or, at least, a mixture of linear and radial polymers having substantial linear character. It would be particularly advantageous if coupling efficiencies approaching 95% could be obtained. Such products would be expected to have properties that are comparable to sequentially polymerized S-E/B-S polymers, which are less economic to produce due to the viscosity increase of the polymer system towards the end of the polymerization step. It would also be highly advantageous if residual coupling agent or its by-products were found to have no adverse affect on the activity of the hydrogenation catalyst. Finally it would be highly advantageous if the coupled polymer composition does not suffer from decoupling during a subsequent hydrogenation step.

### SUMMARY OF THE INVENTION

The present invention broadly encompasses a process for making a coupled block copolymer composition, comprising the steps of:
a. reacting a living lithium-terminated polymer having the formula P-Li, where P is a copolymer chain having at least one polymer block A composed of one or more mono alkenyl arenes having 8 to 18 carbon atoms and at least one polymer block B composed of one or more conjugated dienes having 4 to 12 carbon atoms, with an alkoxy silane coupling agent having the formula R-Si-(OR')₃, where R is selected from aryl radicals having from 6 to 12 carbon atoms, or linear alkyl and branched alkyl radicals having from 1 to 12 carbon atoms, and R' is selected from linear alkyl radicals having from 1 to 4 carbon atoms, and where the molar ratio of Si to Li is between 0.35 and 0.7, thereby forming a coupled block copolymer composition;
b. optionally hydrogenating the coupled block copolymer composition; and
c. recovering the resulting coupled block copolymer composition.

The present invention also encompasses the resulting (hydrogenated) block copolymer compositions made using the alkoxy silanes of the process. In particular, the present invention includes a block copolymer composition comprising:
a. a tetra-branched block copolymer (IV) represented by the general formula (P)₄X;
b. a tri-branched block copolymer (III) represented by the general formula (P)₃X;
c. a di-branched block copolymer (II) represented by the general formula (P)₂X; and
d. a linear block copolymer (I) represented by the general formula P; where:
   i) P represents a block copolymer having a number average molecular weight of 25,000 to 200,000 and having at least one polymer block A composed of one or more mono alkenyl arenes having 8 to 18 carbon atoms and at least one polymer block B composed of one or more conjugated dienes having 4 to 12 carbon atoms;
   ii) X represents the residue of an alkoxy silane coupling agent having the formula R-Si-(OR')₃, where R is selected from aryl radicals having from 6 to 12 carbon atoms, or linear alkyl and branched alkyl radicals having from 1 to 12 carbon atoms, and R' is selected from linear alkyl radicals having from 1 to 4 carbon atoms; and
   iii) the relative amounts of copolymers I, II, III and IV are 0 to 5 weight percent IV, 0 to 10 weight percent III, 65 to 95 weight percent II and 0 to 20 weight percent I, where the total of I, II, III and IV equals 100 weight percent. It also comprises the hydrogenated block copolymer composition.

### DETAILED DESCRIPTION OF THE PREFERRED EMBODIMENTS

In one embodiment, the present invention is a process which includes a step of reacting a living lithium-terminated polymer having the formula P-Li where P is a block copolymer chain of one or more conjugated dienes having 4 to 12 carbon atoms and one or more mono alkenyl arenes having 8 to 18 carbon atoms with the alkoxy silane coupling agent.

The preferred acyclic conjugated dienes that can be polymerized into the polymer chain P of the present invention are those containing 4 to 8 carbon atoms. Examples for such conjugated dienes arel,3-butadiene (termed "butadiene" in the claims and elsewhere in the specification), 2,3-dimethyl-1,3butadiene, piperylene, 3-butyl-1,3octadiene, isoprene, 2-phenyl-1,3-butadiene.

Mono alkenyl arenes that can be polymerized together with the dienes to form the polymer chain P are preferably those selected from the group of styrene, the methylstyrenes, particularly 3-methylstyrene, the propylstyrenes, particularly 4-propylstyrene, the butyl styrenes, particularly p-t-butylstyrene, vinylnapthalene, particularly 1-vinylnapthalene, cyclohexylstyrenes, particularly 4-cyclohexylstyrene, p-tolylstyrene, and 2-vinyl-5-hexylnaphthalene.

The presently preferred monomers are isoprene, 1,3-butadiene and styrene. The presently preferred polymer chains P are those where the conjugated dienes are present in a major amount and the mono vinyl-substituted arenes are present in a minor amount. It is preferred that the mono alkenyl arene content be from 5 to 50 weight percent of the total block copolymer, more preferably from 10 to 35 weight percent.

Preferably, polymer chain P has a structure A-B- or B-A-A- or A-B-B'- so that B or B' is attached to the coupling agent, and in which A represents a block of mono alkenyl arenes, preferably a polystyrene block, and B and B' represent different blocks that confer rubbery properties to the polymer chain, such as a poly conjugated diene block, a copolymer block of a conjugated dienes, a copolymer block of a conjugated diene and a mono alkenyl-substituted arene (in which case the total content of mono alkenyl-substituted arene may be up to 70 weight percent), or a combination of such blocks. Such a polymer exhibits properties both of an elastomer and of a thermoplastic polymer. Therefore, such polymers can be formed into articles by standard procedures known for producing articles from thermoplastic polymers while the finished article exhibits elastomeric properties.

In an alternative embodiment, the mono alkenyl-substituted are are present in a major amount, thus resulting in a polymer that exhibits the properties of a toughened polystyrene.

It is generally important to control the molecular weight of the various blocks. For each A block the desired block weights are 3,000 to 60,000, preferably 5,000 to 50,000. For each B or B' block the desired block weights are 20,000 to 200,000, preferably 20,000 to 150,000. These molecular weights are most accurately determined by light scattering measurements, and are expressed as number average molecular weights.

It may also be important to control the microstructure or vinyl content of the conjugated diene in the B blocks. The term "vinyl" has been used to describe the polymer product that is made when 1,3-butadiene is polymerized via a 1,2-addition mechanism. The result is a monosubstituted olefin group pendant to the polymer backbone, a vinyl group. In the case of anionic polymerization of isoprene, insertion of the isoprene via a 3,4-addition mechanism affords a geminal dialkyl C=C moiety pendant to the polymer backbone. The effects of 3,4-addition polymerization of isoprene on the final properties of the block copolymer will be similar to those from 1,2-addition of butadiene. When referring to the use of butadiene as the conjugated diene monomer, it is preferred that 10 to 80 mol percent of the polymerized butadiene units in the polymer block have a 1,2-addition configuration. Preferably, from 30 to 80 mol percent of the polymerized butadiene units should have 1,2-addition configuration. When referring to the use of isoprene as the conjugated diene, it is preferred that 5 to 80 mol percent of the polymerized isoprene units in the block have 3,4-addition configuration. Polymer microstructure (mode of addition of the conjugated diene) is effectively controlled by addition of an ether, such as diethyl ether, a diether, such as 1,2-diethoxypropane, or an amine as a microstructure modifier to the diluent. Suitable ratios of microstructure modifier to lithium polymer chain end are disclosed and taught in US Re. 27,145.

Furthermore, specific polymers constituting preferred embodiments of this invention are those obtained by reactions and procedures disclosed in detail in the following description of a process to make these polymers.

The quantity of coupling agent employed with respect to the quantity of living polymers P-Li present depends largely upon the degree of coupling and the properties of the coupled polymers desired. Thus, the coupling agent defined above will be employed in a range of from 0.35 to 0.7 moles of coupling agent per mole of lithium, P-Li, more preferably from 0.4 to 0.55 moles of coupling agent based upon the moles of lithium present in the polymer, P-Li, most preferably from 0.45 to 0.5 moles of coupling agent per mole of lithium, P-Li. At lower silicon coupling agent to lithium chain end molar ratios Si/Li (mol/mol), there is not enough coupling agent present to allow high levels of coupling; the coupling efficiency will start to decline if lower Si/Li molar ratios are employed. Lower levels of coupling will tend to lead to a block copolymer product having less strength; the unlinked arms tend to dilute out the strength forming network in the block copolymer. A further problem with using lower Si/Li molar ratios is that at high conversion it will tend to advance the coupling reaction to make higher levels of 4-arm coupled product. The 4-arm coupled product is not preferred as it can contribute to excessive viscosity in the melt which makes melt processing of the product more difficult. Lower Si/Li (mol/mol) ratios are also not preferred because they can lead to weaker products that are more difficult to melt process.

On the other hand, Si/Li (mol/mol) ratios in excess of 0.7 are also not preferred. At Si/Li (mol/mol) = 0.5, there is sufficient coupling agent present to couple all of the chain ends into a linear, 2-arm product; this is the preferred result. Higher levels of Si/Li (mol/mol) only result in the addition of excess coupling agent. The addition of excess reagent contributes added cost to the process without an advantage in the quality of the coupled polymer. At ratios greater than 0.7, the excess coupling agent will tend to cap living chain ends without linking them together; this will contribute to a decline in coupling efficiency at higher Si/Li molar ratios. Lower coupling efficiency will afford block copolymer products having less strength. The use of Si/Li (mol/mol) ratios in excess of 0.7 will unnecessarily increase the cost of the process and will afford lower quality coupled polymers.

As stated above, the coupling agent used in the present invention is an alkoxy silane of the general formula Rₓ-Si-(OR')₃, where R is selected from aryl, linear alkyl and branched alkyl radicals, and R' is selected from linear alkyl radicals. Preferred trialkoxy silanes are methyl trimethoxy silane ("MTMS"), methyl triethoxy silane ("MTES"), isobutyl trimethoxy silane ("IBTMO") and phenyl trimethoxy silane ("PhTMO"). Of these the more preferred is methyl trimethoxy silane.

The temperature at which the coupling reaction is carried out can vary over a broad range and, for convenience, often is the same as the temperature of polymerization. Although the temperature can vary broadly from 0° to 150°C, it will preferably be within the range from 30°C to 100°C, more preferably 55°C to 80°C.

The coupling reaction is normally carried out by simply mixing the coupling agent, neat or in solution, with the living polymer solution. The reaction period is usually quite short, and can be affected by the mixing rate in the reactor. The normal duration of the coupling reaction will be in the range of 1 minute to 1 hour. Longer coupling periods may be required at lower temperatures.

After the coupling reaction, the linked polymers may be recovered, or if desired they may be subjected to hydrogenation, for instance, the selective hydrogenation of the diene portions of the polymer. Hydrogenation generally improves thermal stability, ultraviolet light stability, oxidative stability, and weatherability of the final polymer. It is important that the coupling agents not interfere with or otherwise "poison" the hydrogenation catalyst.

Hydrogenation can be carried out via any of the several hydrogenation or selective hydrogenation processes known in the prior art. For example, such hydrogenation has been accomplished using methods such as those taught in, for example, U.S. Patents 3,494,942; 3,634,594; 3,670,054; 3,700,633; and Re. 27,145. These methods operate to hydrogenate polymers containing aromatic or ethylenic unsaturation, and are based upon operation of a suitable catalyst. Such catalyst, or catalyst precursor, preferably comprises a Group VIII metal such as nickel or cobalt which is combined with a suitable reducing agent such as an aluminum alkyl or hydride of a metal selected from Groups I-A, II-A and III-B of the Periodic Table of the Elements, particularly lithium, magnesium or aluminum. This hydrogenation can be accomplished in a suitable solvent or diluent, for instance at a temperature from 20°C to 100°C, and a pressure of 2 bars to 50 bars. Other catalysts that are useful include titanium based catalyst systems and various heterogeneous catalysts.

Selective hydrogenation can be carried out under such conditions that at least 90 percent of the conjugated diene double bonds have been reduced, and between zero and 10 percent of the arene double bonds have been reduced. Preferred ranges are at least 95 percent of the conjugated diene double bonds have been reduced, and more preferably 98 percent of the conjugated diene double bonds are reduced. Alternatively, it is possible to hydrogenate the polymer such that aromatic unsaturation is also reduced beyond the 10 percent level mentioned above. In that case, the double bonds of both the conjugated diene and arene may be reduced by 90 percent or more. Moreover, it is also possible to hydrogenate only a portion of the conjugated diene double bonds, corresponding (approximately) to the vinyl content of the conjugated diene polymer block.

It has been found that degradation of the polymer composition can be reduced or eliminated by contacting the coupled polymer with an alcohol, such as methanol, after coupling is complete and prior to hydrogenation. In that case it is preferred that the ratio of alcohol to P-Li is from 0.05 to 1.5 moles of alcohol per mole of P-Li (where the amount of P-Li in the calculation is based on the amount of living chain ends which were present prior to the addition of the coupling agent).

After hydrogenation, the hydrogenated polymers may be cleaned up by standard techniques, such as addition of aqueous acid solutions to remove the residues of the polymerization initiator and hydrogenation catalyst. It is usually preferred to add an antioxidant to the reaction mixture before isolation of polymer.

The polymer may be separated from the reaction mixture by standard techniques, such as steam stripping or coagulation with a suitable non-solvent such as an alcohol or water. In the case of steam stripping, the polymer crumb may be separated from the volatile solvent by countercurrent flow through a cyclone. In a like manner, the coagulated polymer crumb may be separated from the liquid solvent phase by centrifugation or filtration. Alternatively, the polymer may be recovered by passing the cement through a devolatilizing extruder. Residual solvent and other volatiles can be removed from the isolated polymer by heating, optionally under reduced pressure or in a forced airflow.

As far as the synthesis of the living polymer chain P-Li is concerned, this may be obtained by reacting a monofunctional lithium initiator system with the respective monomer or monomers. This polymerization step can be carried out in one step or in a sequence of steps. In the case where the polymer chain P comprises a random or tapered copolymer block of two or more monomers, the monomers may be simultaneously polymerized with the lithium initiator. In the case where the polymer chain P is a block copolymer comprising two or more homo- or copolymer blocks, these individual blocks can be generated by incremental or sequential monomer addition.

The monomers that are generally employed, as well as the monomers that are preferably used have been defined above in connection with the novel polymers of this invention.

The lithium-based initiator systems used to make the living polymer chain generally have the general formula R" Li wherein R" is a hydrocarbyl radical of 1 to 20 carbon atoms. Examples of such lithium initiators are methyllithium, isopropyllithium, n-butyllithium, sec-butyllithium, t-octyllithium, n-dodecyllithium, n-eicosyllithium, phenyllithium, naphthyllithium, p-tolyllithium, 4-phenylbutyllithium, cyclohexyllithium, and 4-cyclohexyllithium. The amount of the lithium initiator employed depends upon the desired properties of the polymer, particularly the desired molecular weight. Normally, the organomonolithium initiator is employed in the range of from 0.1 to 100 gram millimoles per 100 grams of total monomers.

The polymerization reaction is preferably carried out in the presence of a hydrocarbon diluent. Preferably the hydrocarbon diluent is a paraffinic, cycloparaffinic or aromatic hydrocarbon having from 4 to 10 carbon atoms or a mixture of such diluents. Examples for the diluent are n-hexane, hexanes, n-heptane, heptanes, 2,2,4-trimethylpentane, cyclohexane, cyclopentane, isopentane, benzene and toluene. The reaction is generally carried out with a weight ratio of diluent to monomers exceeding 1. Preferably the diluent is employed in a quantity of from 200 to 1000 parts by weight per 100 parts by weight of total monomers.

The polymerization reaction in step 1 usually occurs within a period of time ranging from a few minutes up to 6 hours. Preferably, the reaction is carried out within a time period of from 10 minutes to 2 hours. The polymerization temperature is not critical and will generally be in the range of from 30°C to 100°C, preferably in the range of 55° to 85° C.

The other object of the present invention comprises coupled block copolymer compositions having substantial linear character.

The relative amounts of the tetra-branched (IV), tri-branched (II), di-branched (II) and linear diblock (I) species are: 0 to 5 weight percent tetra-branched IV, 0 to 10 weight percent tri-branched III, 65 to 95 weight percent di-branched II and 0 to 20 weight percent linear diblock I. Preferred amounts are: 0 to 3 weight percent IV, 0 to 8 weight percent III, 79 to 95 weight percent II and 0 to 10 weight percent I.

The block copolymer composition has a Coupling Efficiency ("CE") of 80 to 98 weight percent, preferably 90 to 98 weight percent. Coupling Efficiency is defined as the proportion of polymer chain ends which were living, P-Li, at the time the coupling agent was added that are linked via the residue of the coupling agent at the completion of the coupling reaction. In practice, Gel Permeation Chromatography (GPC) data is used to calculate the coupling efficiency for a polymer product. The sum of the areas under the GPC curve for all of the coupled species (II+III+IV) is divided by the sum of the areas under the GPC curve for all of the coupled moieties plus the area under the curve for the starting, uncoupled polymer species (I+II+III+IV). This ratio is multiplied by 100 to convert the coupling efficiency to a percentage value.

Various materials are known to be detrimental to the lithium alkyl initiated polymerization. Particularly, the presence of carbon dioxide, oxygen, water and alcohols should be avoided during an organomonolithium-initiated polymerization reaction of step 1 of this combined process for making the coupled polymers. Therefore, it is generally preferred that the reactants, initiators, and the equipment be free of these materials and that the reaction is carried out under an inert gas such as nitrogen.

### EXAMPLES

The following examples are provided to illustrate the present invention. The examples are not intended to limit the scope of the present invention and they should not be so interpreted. Amounts are in weight parts or weight percentages unless otherwise indicated.

### Example 1

In this example a number of selectively hydrogenated styrene/butadiene block copolymers were prepared with a variety of coupling agents according to a standard polymerization recipe. The molecular parameters of the desired polymer is shown below in Table 1, where Step 1 is the polystyrene block (A), SD1 apparent is the styrene equivalent molecular weight of the styrene/butadiene diblock arm (P), and CE is coupling efficiency. Coupling Efficiency is defined as the proportion of polymer chain ends which were living, P-Li, at the time the coupling agent was added that are now linked via the residue of the coupling agent at the completion of the coupling reaction. In practice, Gel Permeation Chromatography (GPC) data is used to calculate the coupling efficiency for a polymer product. The sum of the areas under the GPC curve for all of the coupled species (III+III+IV) is divided by the sum of the areas under the GPC curve for all of the coupled plus the area under the curve for the starting, uncoupled polymer species (I+II+III+IV). This ratio is multiplied by 100 to convert the coupling efficiency to a percentage value.

**Table 1.**

| Starting recipe for the syntheses described in Example 1. | |
|---|---|
| | Target Polymer |
| Step I (kg/mole) | 29.0 |
| SD1 Mw (kg/mole) apparent | 136 |
| PSC (%) | 33 |
| Vinyl content (%) | 40 |

The butadiene polymerization was started at 70°C and the temperature was raised adiabatically up to 80°C. After the butadiene addition was stopped, a soak time of 5 minutes was maintained. Following that the coupling agent was added and allowed to react for at least 10 minutes before the polymer cement was sampled.

The following coupling agents were used in the polymerizations:

| | |
|---|---|
| Trimethoxy silane hydride | (TMS) |
| Methyl trimethoxy silane | (MTMS) |
| Octyl trimethoxy silane | (OCTMO) |
| Isobutyl trimethoxy silane | (IBTMO) |
| Tetrakis 2-butoxyethyl orthosilicate | (BG) |
| Tetrabutoxy orthosilicate | (TBS) |

The results of the polymerization experiments are shown below in Table 2, where percentages are expressed as weight percent, CA is coupling agent, CA/Li is the molar ratio of coupling agent to lithium, HPS is homo polystyrene (this is Step I polymer that was terminated by impurities present in the Step II monomer charge; these polymer chains were not living at the time of addition of the coupling agent; for this reason, they are not included in the calculation of coupling efficiency), INT is intermediate in molecular weight polymer that was likely formed via termination mechanisms that occurred during the course of the Step II polymerization (these polymer chains were not living at the time of addition of the coupling agent; for this reason, these polymers were not included in the calculation of coupling efficiency), HMP is high molecular weight polymer (it is higher in MW than the tetrabranched polymer (IV); HMP may come from the coupling of Si centers via an etherification reaction (Si-O-Si); these polymers were included as coupled product in the calculation of coupling efficiency ),PSC is percent styrene in the entire block copolymer, and Vinyl is the 1,2 content of the butadiene blocks:

**Table 2**

| Run # | 1 | 2 | 3 | 4 | 5 | 6 |
|---|---|---|---|---|---|---|
| CA | TMS | BG | OCTMO | MTMS | IBTMO | TBS |
| CA /Li | 0.5 | 0.5 | 0.5 | 0.5 | 0.5 | 0.5 |
| Solids (%) | 19 | 19 | 19 | 17 | 17 | 16 |
| Step I (kg/mole) | 28.7 | 28.2 | 28.3 | 28.8 | 28.3 | 29.8 |
| SD1 (app) Kg/mole | 138.0 | 143.3 | 138.0 | 140.0 | 141.2 | 140.7 |
| Uncoupled Pol. (%) (I) | 8.1 | 13.2 | 15.2 | 6.5 | 7.7 | 20.9 |
| Coupled Linear (%) (II) | 31.4 | 21.1 | 70.2 | 79.3 | 78.6 | 16.4 |
| 3-arm (%) (III) | 37.8 | 34.1 | 5.7 | 6.3 | 3.3 | 46.5 |
| 4-arm (%) (IV) | 6.1 | 6.4 | 1.5 | 0.9 | 1.1 | 8.6 |
| HPS (%) | 4.4 | 10.9 | 4.1 | 2.3 | 7.4 | 1.4 |
| INT (%) | 2.2 | 3 | 2.8 | 4.7 | 1.9 | 2.1 |
| HMP (%) | 10 | 11.3 | 0.6 | - | - | 4.0 |
| CE (%) | 90.3 | 82.4 | 83.6 | 93.0 | 91.5 | 77.4 |
| PSC (%) | 32.5 | 28.2 | 29.7 | 24.4 | 28.7 | 32.0 |
| Vinyl (%) | 34.4 | 35.3 | 35.3 | 38.7 | 41.7 | 42.6 |

From these data one can conclude that coupling agent OCTMO is okay, but that coupling agents MTMS and IBTMO are the most promising with respect to coupling efficiency (CE) and low degree of branching. Both agents show a high CE over 90% and linear product content without significant formation of branched product under the applied conditions. Although there are some differences in molecular parameters (HPS, INT, PSC and vinyl content) between the various samples it is clear that MTMS and IBTMO outperform the other coupling agents.

More products were prepared with MTMS to check the repeatability and compatibility with the hydrogenation process. The results for three runs with MTMS are presented in Table 3.

**Table 3**

| Run # | 7 | 8 | 9 |
|---|---|---|---|
| CA | MTMS 1 | MTMS 2 | MTMS 3 |
| CA /Li | 0.5 | 0.5 | 0.5 |
| Solids (%) | 17 | 17 | 14 |
| Step I (kg/mole) | 28.8 | 26.3 | 25.4 |
| SD1 (app) Kg/mole | 140.0 | 138.0 | 126.3 |
| SD1 (%)I | 6.5 | 6.8 | 7.1 |
| Linear (%)II | 79.3 | 83.3 | 82.7 |
| 3-arm (%)III | 6.3 | 3.6 | 4.1 |
| 4-arm (%)IV | 0.9 | 0.5 | 0.7 |
| HPS (%) | 2.3 | 4.3 | 3.3 |
| INT (%) | 4.7 | 1.6 | 2.7 |
| HMP (%) | - | - | - |
| CE (%) | 93.0 | 92.8 | 93.1 |
| DOB | 2.1 | 2.0 | 2.0 |
| PSC (%) | 24.4 | n.a | 32.8 |
| Vinyl (%) | 38.7 | n.a | 40.4 |

The MTMS coupled product results are very consistent in terms of coupling efficiency and linear product formation. Polymer 9 was hydrogenated at a solids content of 14%. Prior to hydrogenation, and after coupling, the polymer was first contacted with 2-ethyl hexanol. A first batch experiment showed that a complete conversion (residual unsaturation of 0.04 mille-equivalents per gram) was reached after 90 minutes at 70°C with 6 ppm Co. The GPC analysis showed that there was no decoupling. A sample from hydrogenation in a continuous hydrogenation unit (CHU) was also prepared. The results from both runs are shown below in Table 4.

**Table 4**

| | Precursor | Hydrogenated Batch | Hydrogenated CHU |
|---|---|---|---|
| Linear (%) II | 82.7 | 81.4 | 82.2 |
| 3-arm (%)III | 4.1 | 4.3 | 4.2 |
| 4-arm (%)IV | 0.7 | 1.5 | 1.0 |
| HPS (%) | 3.3 | 2.9 | 2.7 |
| INT (%) | 2.7 | 2.8 | 2.6 |
| CE (%) | 93.1 | 92.5 | 92.2 |
| PSC (%) | 32.8 | 32.5 | 32.7 |

The results of the hydrogenation show that MTMS is a very good candidate for making hydrogenated polymers since there is no evidence of degradation during the hydrogenation.

## Claims

1. A process for making a coupled block copolymer composition, comprising the steps of:
a. reacting a living lithium-terminated polymer having the formula P-Li, where P is a copolymer chain having at least one polymer block A composed of one or more mono alkenyl arenes having 8 to 18 carbon atoms and at least one polymer block B composed of one or more conjugated dienes having 4 to 12 carbon atoms, with an alkoxy silane coupling agent having the formula R-Si-(OR')₃, where R is selected from aryl radicals having from 6 to 12 carbon atoms, or linear alkyl and branched alkyl radicals having from 1 to 12 carbon atoms, and R' is selected from linear alkyl radicals having from 1 to 4 carbon atoms, and where the molar ratio of Si to Li is between 0.35 and 0.7, thereby forming a coupled block copolymer composition;
b. optionally hydrogenating the coupled block copolymer composition; and
c. recovering the resulting coupled block copolymer composition.

2. The process according to claim 1 wherein said conjugated diene is selected from butadiene and isoprene and said mono alkenyl arene is styrene.

3. The process according to claim 2 wherein P is a block copolymer of styrene and butadiene with the butadiene block being attached to the lithium ion.

4. The process according to claim 3 wherein the styrene block has an average molecular weight of from 3,000 to 60,000 and said butadiene block has an average molecular weight of from 20,000 to 200,000.

5. The process according to claim 14 wherein said alkyl trialkoxy silane is methyl trimethoxy silane.

6. The process according to claim 15 wherein the coupled polymer is contacted with an alcohol prior to hydrogenation.

7. The process according to claim 1 wherein the molar ratio of Si to Li is from 0.4 to 0.55.

8. A block copolymer composition comprising:
a. a tetra-branched block copolymer (IV) represented by the general formula (P)₄X;
b. a tri-branched block copolymer (III) represented by the general formula (P)₃X;
c. a di-branched block copolymer (II) represented by the general formula (P)₂X; and
d. a linear block copolymer (I) represented by the general formula P; where:
i) P represents a block copolymer having a number average molecular weight of 25,000 to 200,000 and having at least one polymer block A composed of one or more mono alkenyl arenes having 8 to 18 carbon atoms and at least one polymer block B composed of one or more conjugated dienes having 4 to 12 carbon atoms;
ii) X represents the residue of an alkoxy silane coupling agent having the formula R-Si-(OR')₃, where R is selected from aryl radicals having from 6 to 12 carbon atoms, or linear alkyl and branched alkyl radicals having from 1 to 12 carbon atoms, and R' is selected from linear alkyl radicals having from 1 to 4 carbon atoms; and
iii) the relative amounts of copolymers I, II, III and IV are 0 to 5 weight percent IV, 0 to 10 weight percent III, 65 to 95 weight percent II and 0 to 20 weight percent I, where the total of I, II, III and IV equals 100 weight percent.
